(19) **Europäisches Patentamt**
**European Patent Office**
**Office européen des brevets**

(11) **EP 4 592 373 A1**

(12) # EUROPEAN PATENT APPLICATION

(43) Date of publication:
**30.07.2025  Bulletin 2025/31**

(21) Application number: **24382084.2**

(22) Date of filing: **29.01.2024**

(51) International Patent Classification (IPC):
***C09K 5/06*** *(2006.01)*

(52) Cooperative Patent Classification (CPC):
**C09K 5/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Fundación Universidad Francisco de
Vitoria
28223 Pozuelo de Alarcón (ES)**

(72) Inventor: **YIN, Guang-Zhong
E-28925 Alcorcón, Madrid (ES)**

(74) Representative: **ABG Intellectual Property Law,
S.L.
Avenida de Burgos, 16D
Edificio Euromor
28036 Madrid (ES)**

(54) **POLYROTAXANE AEROGEL BASED PHASE-CHANGE COMPOSITES FOR THERMAL
ENERGY STORAGE AND HEAT MANAGEMENT**

(57)  The invention relates to a composite phase-change material (PCM) comprising a highly porous PLR aerogel and a PCM, wherein the PCM occupies an internal volume of the aerogel. This material takes full advantage of the highly porous aerogel which is capable of entrapment of high amounts of PCM, while avoiding seepage of the PCM. The physical properties of the material of the invention can be tailored by the incorporation of different functional additives. The invention further relates to a polymer/phase-change material comprising a 3D-printed polymer skeleton, and aerogel and a PCM. Methods for the preparation of these materials are also within the scope of the invention as well as their use and applications.

EP 4 592 373 A1

**Description**

**FIELD OF THE INVENTION**

This invention relates to the field of thermal energy storage and heat management, more precisely to the field of latent heat energy storage and heat management based on phase-change composite materials. The materials of the invention comprise a highly-porous polyrotaxane (PLR) aerogel and a PCM work substance.

**BACKGROUND**

The increasingly prominent energy and environmental problems are pushing the requirements of our society for improved energy conservation and environmental protection. The requirements for efficient energy use are also increasingly higher. Thermal energy storage (TES) technologies are valuable components in many energy systems and could be an important tool in achieving a low-carbon future. According to the storage principle, TES technologies can be divided into three categories: sensible heat storage, latent heat storage and thermochemical heat storage. Sensible heat storages are the most commonly deployed type of TES. However, latent heat storage technologies based on Phase-change Materials (PCMs) are particularly attractive for applications where thermal energy has to be stored or delivered over a narrow temperature range or when compactness is a requirement. Indeed, PCMs are capable of absorbing or releasing great amounts of energy in the form of latent heat during phase transitions at nearly constant temperature. They enable compact TES systems with volumetric storage capacity five to ten times greater than that of sensible heat storage systems.

During the development of PCMs, many kinds of materials have been deeply studied, including inorganic compounds (salts and hydrated salts) and organic compounds, such as, paraffins, fatty acids, and polyethylene glycols (PEGs). Studying the relationship between the basic structure and energy storage properties of PCMs is helpful to determine their ultimate energy storage/release mechanism. Generally, the ideal PCMs should satisfy the required thermophysical and chemical properties, such as suitable phase transition temperature, high energy storage density, good thermal conductivity, anti-leakage, shape-stability and both good chemical and cycling stability.

Most widely used PCMs undergo solid-liquid transitions (solid-liquid PCM). However, solid-liquid PCMs require encapsulation in order to avoid leakage of the liquid phase at temperatures above the melting point which may limit the practical use of PCMs. At present, there are various methods that try to solve the leakage problem of PCMs, which generally consist of porous solid supports capable of PCMs entrapment. Methods for obtaining leakage-free materials include the adsorption method, microencapsulation method, sol-gel method, membrane method or the electrospinning method. Common porous materials for adsorption method include clay minerals, porous carbon materials, and metal foams.

In this way, composite PCM refers to a class of materials composed of a supporting material which encloses the PCM work substance, examples being micro-encapsulated PCMs and the so-called shape-stabilized PCMs.

*Micro-encapsulation* is the process of coating individual particles or droplets with a film to produce capsules at micrometer to millimeter size (<1000 μm), known as a microcapsule, microparticles or microspheres. Capsules at nanometer in size (<100 nm) are known as nanocapsules, nanoparticles or nano-sphere. These capsules are composed of two main parts: the core comprising a solid-liquid PCM and a shell comprising a polymer, inorganic or hybrid material. The shell will act as a container to protect the inner core PCMs from the external environment and to avoid leakage of the PCM when in liquid phase. Micro- or nano-capsules exist in several shapes such as spherical, tubular, oval or irregular shape (Khadiran, T., Hussein, M.Z., Zainal, Z. and Rusli, R., Encapsulation techniques for organic phase-change materials as thermal energy storage medium: A review. Solar Energy Materials and Solar Cells, 2015, 143, 78-98; Sarier, N. and Onder, E., Organic phase-change materials and their textile applications: An overview. Thermochimica Acta, 2012, 540, 7-60). Micro-encapsulated PCMs yield encapsulation efficiency values from 60 to 90 % and PCM-shell mass proportion of up to 80%. However, microcapsules are expensive, can break, often require additional resinous binders for adhesion, and can cause poor fabric flexibility and properties.

*Shape-stabilized phase-change materials* (SPCMs), also referred to as form-stable PCMs, can be defined as a class of solid-liquid PCM materials which maintain their original shape even when the temperature of the PCM is above the melting point (liquid state). SPCMs can be prepared as polymer-based organic materials, which are obtained by blending and characterized by a continuous polymeric matrix that encloses the PCM or as inorganic porous materials that are produced by incorporating a liquid PCM into the porous structure of the supporting material by vacuum assisted infiltration method or by the sol-gel method.

Conventional PCM composite materials as the ones described above have the advantage of containment of the liquid phase. However, they lack good encapsulation efficiencies, have low enthalpy values and their preparation methods often require consumption of large quantity organic solvents and require high temperature processes.

The confinement of phase change material (PCM) within 3D porous structure has been identified as the most attractive and efficient strategy to fabricate high performance shape stable PCMs. Encapsulation and/or impregnation methodologies are applied in the design of shape-stable PCMs by incorporating pristine PCMs into supporting materials.

Polyrotaxanes (PLRs) are polymeric rotaxanes. These supramolecular constructs comprise a linear polymeric chain threaded through at least one macrocycle with no chemical bonding between the macrocyclic and the linear component. The macrocycle molecules are usually prevented from dethreading by two bulky groups located at the end of the polymer chain. Cyclodextrins (CDs) have been extendedly used as the macrocycles of rotaxanes.

Recently, $\alpha$-cydodexthn ($\alpha$-CD) and polyethylene oxide (PEO) based polyrotaxane has been reported as a promising candidate to act as a support material to form phase change composite materials with a PCM. PLR has shown good processability and high shape capacity. In addition, PLR supramolecules themselves can act as a phase change material (Yin, G-Z., Hobson, K., Duan, Y., Wand D-Y., Polyrotaxane: New generation of sustainable, ultra-flexible, form-stable and smart phase change materials Energy Storage Materials 40 (2021) 347-357). Therefore, PLR could be an ideal support material for polyethylene oxide (also known as polyethylene glycol, PEG) based PCMs obtaining composite materials having good durability, high enthalpy efficiency after melting and cooling process, excellent leakage proof performance and green and convenient processability.

It has been recently reported a PLR foam with a great absorption potential (Yin, G-Z., Yang, X-M., Marta López, A., Wang, M-T., Ye, W., Xu, B., Wang, D-Y., Sodium alginate and Chitosan aided design of form-stable Polyrotaxane based phase change materials with ultra-high latent heat International Journal of Biological Macromolecules 2022, 222, 429-437). The PEO chain of PLR ensured the perfect compatibility between the foam and the PEG, therein used as PCM material. However, it was found that pure PLR foams tend to collapse during the PCM absorption, making it difficult for PCM to retain shape in the end.

3D printing technology has been used in the manufacture of aerogels based on different materials. For example, 3D printing technique in graphene aerogels has been widely explored. CN105128127A reported the preparation of a graphene aerogel by means of 3D printing technology. In this document, a phenol-melamine-formaldehyde-furfural mixed system, and collagen were added at the same time, so that the binding force between layers is improved, and the deformation phenomenon is reduced. However, the addition of these additives affected the performance of graphene itself, limiting the application. Furthermore, the low mechanical strength and friability of the traditional aerogels hinder their industrial application, while the emergence of polymer aerogels can be considered as a promising alternative to overcome these issues. In this context, document CN110982111B discloses a 3D printed aramid aerogel which can be immersed in a molten phase change material to obtain a temperature-responsive 3D printed aramid aerogel material. Although recent progress has been made in the preparation of energy conversion and multifunctional application of aerogel-based PCM materials, there are still several problems to be solved, such as their poor mechanical properties and the difficulties of obtaining these materials by means of a large scale production.

## BRIEF DESCRIPTION OF THE INVENTION

The authors of the present invention have developed an improved composite phase-change material (PCM) based on polyrotaxane (PLR) aerogels, prepared by a physical or chemical crosslinking method comprising freeze drying procedures, characterized by a phase change enthalpy of 150-200 J/g, detected by Differential Scanning Calorimetry (DSC). The materials are characterized by uniform, and reproducible structures.

Furthermore, the inventors have also developed a polymer/phase-change material composite. This new composite material is obtained by means of a versatile method, which allows the production of high-performance phase change materials with stable shape, and with improved anti-leakage properties.

To the best knowledge of the inventors, no such composite PCM material had ever been disclosed before.

Therefore, the invention disclosed herein and defined in the claims relates to composite PCMs in which a highly porous crosslinked polyrotaxane aerogel encapsulates/supports a PCM. It differs from previous works in the fact that the outer encapsulating/supporting material is a PLR aerogel, leading to major new features and advantages as described in the present disclosure.

In a first inventive aspect the invention provides a shape-stabilized composite phase-change material comprising:

    a) a crosslinked polyrotaxane aerogel; and
    b) a solid-liquid phase-change material;

wherein the phase-change material occupies an internal volume of the aerogel.

A second aspect is directed to a method for the preparation of the composite phase-change material of the invention, wherein a polyrotaxane aerogel is put in contact with a molten phase-change material, and wherein said polyrotaxane aerogel is prepared by a method comprising the steps of:

a) Dissolving a polymer molecule in a solvent;
b) Adding a cyclodextrin to the solution of step a) to give a reaction mixture;
c) Cooling the reaction mixture obtained in step b);
d) Optionally, adding a cross-linking agent to the mixture obtained in step c);
e) Freeze drying the mixture obtained in step c) and adding a cross-linking agent, or freeze drying the mixture obtained in step d), to obtain a crosslinked polyrotaxane aerogel.

In a third aspect, the invention is directed to a shape-stabilized polymer/phase-change material comprising:

a) a 3D-printed polymer skeleton;
b) an aerogel; and
c) a solid-liquid phase-change material.

The introduction of a polymer skeleton can effectively enhance the mechanical properties of aerogels. Thus, shape-stabilized multifunctional and high-performance phase change materials exhibiting anti-leakage properties and high strength can be obtained.

In a fourth aspect, the invention is directed to a method for obtaining a shape-stabilized polymer/phase-change material composite, comprising the steps of:

a) 3D printing a polymer skeleton using a functional polymer;
b) Incorporating an aerogel to the polymer skeleton obtained in step a) to form a supporter material;
c) Absorbing a solid-liquid phase change material in the supporter material obtained in step b) to form a polymer/phase-change material composite.

The introduction of 3D printing technology allows to digitally design the appearance of the final product. This method can achieve precise design for special surfaces with different structural distributions based on the special requirements.

In a fifth aspect, the invention is directed to the use of the composite phase-change material according to the invention, or of the polymer/phase-change material composite according to the invention, in thermal energy storage or thermal management including peak energy reduction, preferably in electronics, power electronics, solar energy, batteries, buildings, waste heat recovery, air-conditioning, temperature-adaptable greenhouses and textiles.

## BRIEF DESCRIPTION OF THE DRAWINGS

Figure 1. 3D printed PLA based skeleton with different shapes and internal patterns.
Figure 2. Typical SEM morphology of PLR aerogels of the invention (aerogel sample prepared according to example 3).

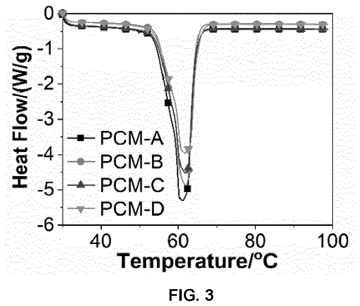

Figure 3. DSC curves of typical PLR based PCM composites of the invention. PCM-A, PCM-B, PCM-C and PCM-D were prepared according to Examples 5, 6, 7 and 8 of the invention, respectively.

## DETAILED DESCRIPTION OF THE INVENTION

Shape-stabilized composite phase-change material

In a first inventive aspect the invention provides a shape-stabilized composite phase-change material comprising:

a) a crosslinked polyrotaxane aerogel; and
b) a solid-liquid phase-change material;

wherein the phase-change material occupies an internal volume of the aerogel.

In the context of the invention, the term "shape-stabilized" is synonym to "form-stabilized" and refers to a composite phase-change material without any encapsulation that retains its shape within the relevant working temperature of the PCM, for a large number of thermal cycles. The shape stabilization is conferred by the combination of an aerogel encapsulating a PCM that, when heated, does not leak out of the aerogel when in liquid form.

Aerogel

Aerogels are a special class of porous gel materials in which the liquid part is replaced by gas without shrinking the shape of it.

In the composite material of the invention, the aerogel is a polyrotaxane aerogel.

In a particular embodiment, the PLR aerogel of the invention is characterized by an overall porosity in the range of from 80% to 99%. In a particular embodiment, the overall porosity of the PLR aerogel is equal to or higher than 80%, preferably equal to or higher than 82%, or 84%, more preferably equal to or higher than 86%, and even more preferably equal to or higher than 88%. The porosity of the aerogel may be calculated, for the purposes of the present disclosure, by means of equation (1) as shown below, by previously knowing the densities of the precursor PLR and of the PLR aerogel. While the density of the PLR used is known from 1.4 to 1.6 g/cm$^3$, the density of the PLR aerogel can be determined directly from the ratio of mass to volume.

$$\text{Porosity \%} = 100\% \times \frac{\text{density}_{PLR} - \text{density}_{Aerogel}}{\text{density}_{PLR}} \qquad (1)$$

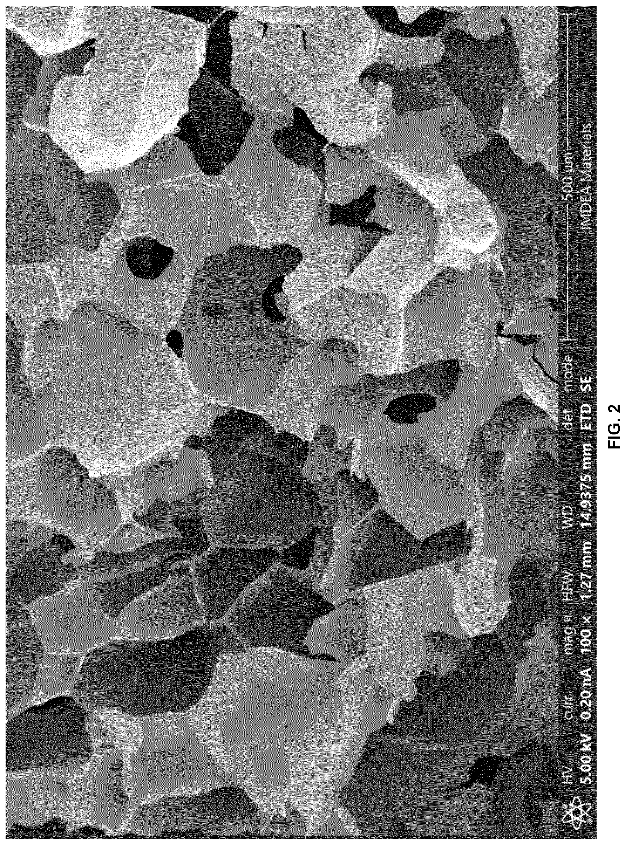

In the present invention, the PLR aerogel is characterized by an internal macro porous structure. In this context, the term "macro porous" refers to the morphology of the aerogel of the invention, when observed under a Scanning electron microscope (SEM), which is characterized by structures that have at least one of its pore sizes is greater than 100 nm, as shown in Fig. 2

As mentioned in the background section above, polyrotaxane (PLR) is a type of interlocked molecule comprising a single polymer chain and one or more cyclic macromolecules.

In a particular embodiment, the PLR aerogel of the invention comprises polyethylene oxide chains with different molecular weights. Therefore, in this particular embodiment, the PLR aerogel comprises at least two polyrotaxanes, each characterized by comprising polyethylene oxide chains of different molecular weights. For example, the PLR aerogel may comprise a first group of polyrotaxane molecules with polyethylene oxide chains of a higher molecular weight, and a second group of polyrotaxane molecules with polyethylene oxide chains of a lower molecular weight. The polyethylene oxide chains with higher molecular weight provides toughness, whereas the polyethylene oxide chains with lower molecular weight chains provides nano-reinforcement and physical cross-linking.

The polyethylene oxide chains of the PLR aerogel of the invention can be lineal chains, branched chains or mixtures thereof. Therefore, in a particular embodiment, the polyethylene oxide chains of the aerogel of the invention are lineal chains. In another particular embodiment, the polyethylene oxide chains of the aerogel of the invention are branched chains. In a more particular embodiment the polyethylene oxide chains of the aerogel of the invention are a mixture of lineal chains and/or branched chains.

The polyrotaxane molecules of the invention comprise cyclodextrins (CDs). In a particular embodiment, the polyrotaxane molecules of the invention comprise α-cyclodextrins. In another embodiment, the polyrotaxane molecules of the invention comprise β-cyclodextrins. In another embodiment, the polyrotaxane molecules of the invention comprises a mixture of α-cyclodextrins and β-ciclodextrins. Preferably, the polyrotaxane molecules of the invention comprise α-cyclodextrins.

In another particular embodiment, the polyrotaxane comprise cyclodextrin molecules in an amount of from 10 wt% to 40 wt%, the weight percentage given with respect to the weight of the polymer chain molecule.

In a particular embodiment, the polyrotaxane aerogel of the invention comprises at least one polyrotaxane, preferably at least two polyrotaxanes. In this description and in the context of the last sentence, the expression "at least one polyrotaxane" is to be understood as "one, or more polyrotaxanes of different molecular size". Similarly, "at least two polyrotaxanes" means "two, or more, polyrotaxanes of different sizes". The skilled person will readily understand that "one polyrotaxane" does not refer to a single molecule but rather to the nature (for example, size of the main polymer chain, molecular structure, and number of cyclodextrins) of the polyrotaxane molecules.

Thus, in a particular embodiment, the shape-stabilized composite phase-change material of the invention comprises:

a) an aerogel comprising

    i. a first crosslinked polyrotaxane; and
    ii. a second crosslinked polyrotaxane;
    and,

b) a solid-liquid phase-change material;

wherein the phase-change material occupies an internal volume of the aerogel

In a particular embodiment of the previous embodiment, the aerogel of the invention comprises between 20 wt% and 50 wt% of the first polyrotaxane, the amounts by weight being expressed with respect to the total weight of the aerogel. In a more particular embodiment, the aerogel of the invention comprises between 30 wt% and 50 wt% of the first polyrotaxane, the amounts by weight being expressed with respect to the total weight of the aerogel. In an even more particular embodiment, the aerogel of the invention comprises between 40 wt% and 50 wt% of the first polyrotaxane, the amounts by weight being expressed with respect to the total weight of the aerogel.

In another particular embodiment the aerogel of the invention comprises between 50 wt% and 80 wt% of the second polyrotaxane, the amounts by weight being expressed with respect to the total weight of the aerogel. In another particular embodiment the aerogel of the invention comprises between 50 wt% and 70 wt% of the second polyrotaxane, the amounts by weight being expressed with respect to the total weight of the aerogel. In an even more particular embodiment the aerogel of the invention comprises between 50 wt% and 60 wt% of the second polyrotaxane, the amounts by weight being expressed with respect to the total weight of the aerogel. In a particular embodiment, the PLR aerogel comprises a polyethylene oxide chain of molecular weight above 600 000 g/mol, preferably above 400 000 g/mol. In another particular embodiment, the PLR aerogel comprises a polyethylene oxide chain of molecular weight equal to or below than 600 000 g/mol, preferably equal to or below than 200 000 g/mol. In a more particular embodiment, the PLR aerogel comprises a polyethylene oxide chain of molecular weight above 400 000 g/mol and a polyrotaxane comprising a polyethylene oxide chain of molecular weight below 200 000 g/mol. The PLR aerogel scaffold support, in other words, the polyrotaxane aerogel of the invention, is crosslinked. This provides a polyrotaxane aerogel support material with improved mechanical strength. The PLR aerogel of the invention is crosslinked by chemical functionalization with the cross-linking agent.

In a particular embodiment, the cross-linking agent is selected from the group consisting of silyl ethers isocyanate, diisocyanate, diacyl chloride, dialdehyde, diepoxide and polyepoxide compounds. In a more particular embodiment, the cross-linking agent is selected from the group consisting of trialkoxysilyl isocyanates, diisocyanate and diepoxide. In an even more particular embodiment the cross-linking agent is selected from the group consisting of diisocyanate and 2-(triethoxysilyl) propyl isocyanate.

In a particular embodiment, the PLR aerogel scaffold support of the invention further comprises at least one functional additive. In a particular embodiment, the functional additive is selected from the group consisting of functionalized metal foams, functionalized ceramic porous materials, thermal conductive fillers, flame retardants, pigments and mixtures thereof.

Suitable thermal conductive fillers may be selected from the group consisting of Boron Nitride, graphene, MXene, biochar, carbon fiber and thermally conductive ceramic powders.

Suitable thermally conductive ceramic powders may be selected from AIN, BeO, $Si_3N_4$, SiC, $Al_2O_3$ and mixtures thereof.

Suitable flame retardants are selected from the group consisting of ammonium polyphosphate, phytic acid, chitosan, expandable graphite, lignin derivatives, polyhedral oligomeric silsesquioxane, metal-organic frameworks and layered double hydroxides.

## PCM

In the context of the present invention, a phase-change material (PCM) is a material which undergoes a first-order phase transition of its state or of its microcrystalline structure. For example, a phase transition is that of changing from the solid state to the liquid state or vice-versa (solidification-melting). In the application frame of this invention, the phase transition of the PCM is thermally activated. When the PCM reaches the phase transition temperature, its temperature remains constant during the phase transition since the external heat is no longer used to change the temperature of the PCM but to change the state of the material itself. As a consequence, the energy involved in the phase transition of the PCM, i.e., the specific enthalpy difference between both states of the PCM (at constant temperature) also known as latent heat, is absorbed or released on the melting-solidification process of the PCM.

Therefore, the phase-change material is a solid-liquid phase-change material.

In principle, any solid-liquid PCM can be selected for the composite PCM of the invention, as long as the solid-liquid PCM is characterized by a phase transition at a temperature range that is not as hot as being detrimental to the PLR aerogel.

Other desirable properties of the solid-liquid PCM are high values of heat capacity; high density; resistance to oxidation; non-toxicity; non-flammability; or low volumetric change during phase transition.

In a preferred embodiment, the latent heat of melting of the PCM is above 60 J/g, preferably above 100 J/g, more preferably above 150 J/g, and can be as high as 300 J/g. Preferably, it is comprised between 100 and 300 J/g, more preferably between 150 and 250 J/g.

The temperature at which the phase-change occurs and its total latent heat can be measured by means of Differential Scanning Calorimetry (DSC).

In a particular embodiment, the phase-change material is a solid-liquid phase-change material. In another particular embodiment, the composite phase-change material of the invention comprises at least 30 wt%, preferably at least 50 wt%, more preferably at least 70 wt%, of the phase-change material, the amounts by weight being expressed with respect to the total weight of the composite material.

In a preferred embodiment, the PCMs are selected so that the phase-change material has a phase-change temperature comprised between -30 and 150 °C, preferably between 10 and 150 °C, preferably between 20 and 100 °C, even more preferably between 20 and 80 °C. The phase-change can be a melting or solidification.

In the context of the present invention, alkanes, paraffin waxes, beeswax, metal salts, polyethylene glycols, carboxylic acids, fatty acids, fatty acid esters, fatty alcohols, sugar, sugar alcohols and mixtures thereof, are preferred as PCMs. In a particular embodiment, the phase-change material is selected from the group consisting of polyethylene glycols, alkanes, paraffin waxes, beeswax, metal salts, carboxylic acids, fatty acids, fatty acid esters, fatty alcohols, sugar and sugar alcohols. Preferably, the phase-change material is selected from polyethylene glycol, paraffin, fatty acids, fatty alcohols, beeswax, n-eicosane, n-octadecane, n-hexadecane, nonadecane, heptadecane or mixtures thereof. Even more preferably, the phase-change material is selected from polyethylene glycol, paraffin, stearic acid, stearyl alcohol or a mixture thereof. Exemplary PCMs, suitable for the purposes of the present invention, include linear n-alkanes ($C_nH_{2n+2}$). The intermolecular forces holding n-alkane molecules together are van-der-Waals forces. Therefore, both the melting point and the latent heat of fusion increase progressively with the carbon chain length. Besides, many binary alkane systems make solid-state solutions with very narrow temperature windows (2-5°C) between solidus and liquidus lines (Ventola, L., et al., Molecular alloys as phase change materials for energy storage and thermal protection at temperatures from 70 to 85 °C, J. Phys. Chem. Solids, 2005, 66, 1668-1674). This property allows a blend to be tailored to a particular melting range. Alkanes are preferably straight n-chain alkanes of formula $C_nH_{2n+2}$, preferably n being from 10 to 40, more preferably from 14 to 30, such as for example tetradecane, hexadecane, heptadecane, octadecane, nonadecane, eicosane, docosane, tetracosane, hexacosane, octacosane, or the like, more preferably n-eicosane, n-octadecane, n-hexadecane, nonadecane, heptadecane or mixtures thereof.

Other exemplary PCMs, suitable for the purposes of the present invention, include polyethylene glycol ($HO-(CH_2-CH_2-O)_n-CH_2-CH_2-OH$). The melting temperatures and the latent heat values of these molecules increase gradually as the average molar weight (MW) of the PEG chains increase (Sundararajan, S., et al., Versatility of polyethylene glycol (PEG) in designing solid-solid phase change materials for thermal management and their application to innovative technology, Journal of Materials Chemistry A, 2017, 5, 18379-18396). Therefore, the melting point and heat capacity of a PEG system can be customized by selecting or mixing PEGs with different MWs. In a preferred embodiment, the phase-change material is a polyethylene glycol of an average molecular weight comprised between 400 g/mol and 20000 g/mol, preferably between 600 g/mol and 20000 g/mol, more preferably between 600 g/mol and 10000 g/mol, even more preferably between 2000 g/mol and 10000 g/mol. In a preferred embodiment, the polyethylene glycol is selected from PEG 400, PEG 600, PEG 1000, PEG 1500, PEG 2k, PEG 3k, PEG 4k, PEG 6k, PEG 8k, PEG 10k or mixtures thereof.

Suitable fatty acids include, for example, capric acid, caprylic acid, lauric acid, myristic acid, palmitic acid, stearic acid, arachidic acid, behenic acid, lignoceric acid, cerotic acid, or mixtures thereof. Preferably, the fatty acids are selected from the group of consisting of capric acid, caprylic acid, lauric acid, myristic acid, palmitic acid, stearic acid, or mixtures thereof.

Fatty acid esters include alkyl (e.g. $C_1$-$C_{12}$ alkyl) esters of the above-mentioned fatty acids. Suitable fatty alcohols include 1-heptanol, 1-octanol, pelargonic alcohol, 1-decanol, undecyl alcohol, lauryl alcohol, tridecyl alcohol, myristyl alcohol, pentadecyl alcohol, cetyl alcohol, palmitoleyl alcohol, heptadecyl alcohol, stearyl alcohol, oleyl alcohol, nonadecyl alcohol, arachidyl alcohol, heneicosyl alcohol, behenyl alcohol, erucyl alcohol, lignoceryl alcohol, ceryl alcohol, montanyl alcohol, 1-nonacosanol, myricyl alcohol, 1-dotriacontanol, or mixtures thereof. Preferably, the fatty alcohols are selected from the group of consisting of capric alcohol, lauryl alcohol, myristic alcohol, cetyl alcohol, stearyl alcohol, or mixtures thereof.

As shown in table 1, these PCMs have appropriate melting points. They also have high latent heat. In addition, some of them allows easy tuning of their melting temperature.

**Table 1.** Melting temperature ranges and corresponding phase change latent heat per unit mass and per unit volume for exemplary PCMs.

| Solid-liquid PCMs | Melting temperature (°C) | Latent heat of melting (J/g) | Latent heat of melting (MJ/m$^3$) |
|---|---|---|---|
| n-Alkanes | [-30, 115] | [102, 206] | [180, 375] |
| Paraffin waxes | [-10, 112] | [60, 269] | [57, 255] |
| PEG | [-4, 70] | [118, 176] | [133, 255] |
| Fatty acids | [-7, 81] | [97, 259] | [83, 300] |

(continued)

| Solid-liquid PCMs | Melting temperature (°C) | Latent heat of melting (J/g) | Latent heat of melting (MJ/m$^3$) |
|---|---|---|---|
| Carboxylic acids | [8, 159] | [102, 260] | [180, 374] |

Composite PCM of the invention

The composite PCM of the invention is shape-stabilized. This is because the PLR aerogel functions as support/encapsulating/enclosing material of the PCM and does not require any further compounds to stabilize the PCM. In this context, stabilization refers to the fact that the composite PCM of the invention does not leak PCM when this is in the liquid state, and the shape of the structure is maintained.

In the context of the present invention, reference to the PLR aerogel encapsulating or enclosing the solid-liquid PCM includes any configuration where the PLR aerogel is acting as supporting material for the solid-liquid PCM, i.e. where the solid-liquid PCM occupies an internal volume of the PLR aerogel, so that no seepage occurs even when the temperature of the system is such that the solid-liquid PCM is in liquid state.

The configuration of the composite PCM does not significantly affect the way the invention works, as long as the PLR aerogel functions as shape-stabilizer or support of the solid-liquid PCM. The aerogel PLR and PCMs are chemically compatible with each other. In the context of the present invention, "chemically compatible" means the absence of irreversible chemical reactions between the materials.

The composite PCM of the invention can be tailored to specific needs, because the temperature at which the phase change occurs can be tuned by careful selection of the PCM. In fact, more than one PCM can be also used. In this case, the phase change temperature can be tuned by controlling the relative amounts of each solid-liquid PCM.

In a preferred embodiment, the composite material of the invention comprises at least 10%, at least 20%, at least 30%, at least 40%, at least 50%, at least 60%, at least 70%, at least 80%, or at least 90% of the PCM, by weight percent with respect to the total weight of the composite material of the invention, i.e., the total weight of the aerogel and PCM.

In a more preferred embodiment, the composite material of the invention comprises at least 30% of the PCM, preferably at least 50%, more preferably at least 70%, and even more preferably at least 80%, by weight percent with respect to the total weight of the composite material of the invention.

In another preferred embodiment, the composite material of the invention comprises less than 99%, less than 98%, less than 97%, less than 96% or less than 95% of a PCM, by weight percent with respect to the total weight of the composite material of the invention.

In a most preferred embodiment, the composite material of the invention comprises from 75% to 98%, from 75% to 96%, or from 85% to 95% of PCM, by weight percent with regards to the total weight of the composite material of the invention.

The skilled person readily understands that, when the composite PCM of the invention includes a definition of the amounts of PCM it comprises, expressed in terms of weight percentage values, these values can never sum up to a value which is greater than 100%.

The present invention further contemplates a surface coating or layer that protects the composite PCM of the invention. In a particular embodiment, said coating or layer serves as additional protection against external environment conditions that could reduce the efficacy of the composite PCM of the invention.

Method for the preparation of the composite PCM of the invention

A second aspect is directed to a method for the preparation of the composite phase-change material of the invention, wherein a polyrotaxane aerogel is put in contact with a molten phase-change material, and wherein said polyrotaxane aerogel is prepared by a method comprising the steps of:

    a) Dissolving a polymer molecule in a solvent;
    b) Adding a cyclodextrin to the solution of step a) to give a reaction mixture;
    c) Cooling the reaction mixture obtained in step b);
    d) Optionally, adding a cross-linking agent to the mixture obtained in step c);
    e) Freeze drying the mixture obtained in step c) and adding a cross-linking agent or freeze drying the mixture obtained in step d), to obtain a crosslinked polyrotaxane aerogel.

The polymer molecule of step (a) is a molecule suitable for obtaining a polyrotaxane when complexed with a cyclodextrin. In a particular embodiment, said polymer molecule is a polyethylene oxide chain.

In a particular embodiment, the polymer molecule is dissolved in a polar solvent, preferably selected from the group consisting of water, methanol, ethanol, propanol, and mixtures thereof. In a preferable embodiment the polar solvent is selected from the group consisting of water and methanol. In a more preferable embodiment the polar solvent is water.

The solution of step a) can be heated before the addition of the cyclodextrin. In a preferred embodiment, the solution of step a) is heated at temperatures between 30 °C and 100 °C before the addition of the cyclodextrin. In a more preferred embodiment, the solution of step a) is heated at temperatures between 50 °C and 90 °C before the addition of the cyclodextrin. In an even more preferred embodiment, the solution of step a) is heated at temperatures between 70 °C and 90 °C before the addition of the cyclodextrin.

In a particular embodiment, the cyclodextrin is $\alpha$-cyclodextrin.

In another particular embodiment, the cyclodextrin is added in an amount of from 10 wt% to 40 wt%, the weight percentage given with respect to the weight of the polymer molecule added in step (a).

The reaction mixture obtained after the addition of the cyclodextrin is cooled to yield the corresponding inclusion complex solutions. In an embodiment, the reaction mixture obtained after the addition of the cyclodextrin is cooled to temperatures below 10 °C. In another preferred embodiment, the reaction mixture obtained after the addition of the cyclodextrin is cooled to temperatures below 5 °C. In another preferred embodiment, to temperatures the reaction mixture obtained after the addition of the cyclodextrin is cooled to temperatures below 4 °C.

In an embodiment, the reaction mixture obtained after the addition of the cyclodextrin is cooled from 24 to 120 hours. In a particular embodiment, the reaction mixture obtained after the addition of the cyclodextrin is cooled from 48 to 96 hours. In a more particular embodiment, the reaction mixture obtained after the addition of the cyclodextrin is cooled for 72 hours.

An aerogel is obtained after a process of freeze-drying for over 24 hours by using a freeze dryer. The polyrotaxane aerogel of the invention is crosslinked, and the crosslinking step can be performed either before or after the freeze-drying step. Therefore, in a particular embodiment, the method of the invention comprises the step of freeze drying the mixture obtained in step c) and adding a cross-linking agent, to obtain a crosslinked polyrotaxane aerogel. In another particular embodiment, the method of the invention comprises the step of adding a cross-linking agent to the mixture obtained in step c), and then freeze drying the mixture obtained in step d), to obtain a crosslinked polyrotaxane aerogel.

Polymer/phase-change material composite of the invention

In a third aspect, the invention is directed to a shape-stabilized polymer/phase-change material comprising:

a) a 3D-printed polymer skeleton;
b) an aerogel; and
c) a solid-liquid phase-change material.

In the third aspect of the invention, a phase-change material composite can be incorporated to a polymer skeleton. The use of a polymer skeleton can effectively enhance the mechanical properties, fire safety and thermal conductivity of aerogel-PCM composite materials. In addition, the outer surface of the polymer skeleton can further improve the leakage resistance of the phase-change material composite.

The phase-change composite material of the invention may be advantageously incorporated in the 3D-printed polymer skeleton. Therefore, in a preferred embodiment, the shape-stabilized polymer/phase-change material of the third aspect comprises the aerogel and the phase change-material of the invention, as described above.

By means of 3D-printing technology, it is possible to digitally design the desired appearance of the product. The shape of the final product can be tailored to obtain a precise design for special surfaces with different structural distributions (hierarchical structure) based on the special requirements of each application or use.

Another advantage is the simplicity and wide applicability of the method for obtaining the polymer/phase-change material composite. This process comprises the steps of:

a) 3D printing a polymer skeleton using a functional polymer;
b) Incorporating an aerogel into the polymer skeleton obtained in step a) to form a supporter material;
c) Absorbing a phase change material in the supporter material obtained in step b) to form a polymer/phase-change material composite.

The functional polymer used to 3D printing the polymer skeleton of the invention can be in the form of a filament or can be in the form of a pellet. In a particular embodiment the functional polymer of step a) is in the form of a filament. In another particular embodiment, the functional polymer of step a) is in the form of a pellet.

The skeleton components can be bio-based and environmentally friendly polymers. Non-limiting examples of these polymers are Polyrotaxane, Polylactic acid (PLA), Polycaprolactone (PCL), Polyhydroxyalkanoates (PHA), Polyethylene Terephthalate (PET), Polyethylene (PE), Polypropylene (PP), Polyvinyl Alcohol (PVA), bio-based nylon, bio-based polycarbonate or bio-based epoxy resin.

Functional additives can be added to the polymer skeleton, to enhance or increase a property of interest. Non-limiting examples of these functional additives are flame retardants, thermal conductive fillers and other functional fillers such as antistatic agents or electromagnetic shielding fillers known in the state of the art.

The shape of the skeleton can be tailored depending on the requirements of the application. In a particular embodiment, the shape of the skeleton can be a cylinder, a hollow cylinder, a circular plate, a square plate and can also have a special shape. Not limiting examples of these special shapes can be helmet shapes, shape of any related electronic component, or shape of any accessory for automobiles. The shape is selected according to specific application scenarios.

## Examples

**Example 1.** PEO (5 g) was dissolved in $H_2O$ (150 mL) at 80 °C, and then $\alpha$-CD was further dissolved with a mass ratio of 10% in the PEO solution. After overnight stirring at room temperature, the reaction mixture was cooled down and kept at 4 °C for 72 h to yield the corresponding inclusion complex solutions. The inclusion complex solutions were placed into regular plastic containers (cylinder polypropylene bottles), and freeze dried. Later, the obtained porous materials were put in contact with 150 mL of n-hexane and hexamethylene diisocyanate, (in a mass ratio between 1:10 and 1:5), with two drops of stannous octoate. After 48 h, the crosslinked PLR aerogels were obtained. Molten PEG was adsorbed into the crosslinked PLR aerogel under 70 °C in vacuum oven. Enthalpy determined by DSC, was 182.3 J/g, and the thermal conductivity measured by Hot Disk TPS 2500s thermal analyzer was 0.2239 W/(m·K).

**Example 2.** The same method of Example 1 was followed, but in this case the mass ratio of $\alpha$-CD was 20%. Enthalpy was detected by DSC with value of 164.3 J/g, and the thermal conductivity measured was 0.2788 W/(m·K).

**Example 3.** The same method of Example 1 was followed, but in this case the mass ratio of $\alpha$-CD was 30%. Enthalpy was detected by DSC with value of 156.1 J/g, and the thermal conductivity measured was 0.2814 W/(m·K).

**Example 4.** The same method of Example 1 was followed, but in this case the mass ratio of $\alpha$-CD was 40%. Enthalpy was detected by DSC with value of 149.6 J/g, and the thermal conductivity measured was 0.2899 W/(m·K).

**Example 5.** PEO (3 g) was dissolved in $H_2O$ (80 mL) at 80 °C, and then $\alpha$-CD with 10 wt% was slowly added. After an overnight stirring at room temperature, the reaction mixture was cooled down and kept at 4 °C for 72 h to yield the corresponding inclusion complex solutions. The recovered PLR (1000 mg) was dissolved in dimethyl sulfoxide (DMSO) (2 mL), and 2-(triethoxysilyl) propyl isocyanate (2.5 mmol) was added and allowed to react. The silane-induced PLR powder was collected by evaporating the solvent. The Si-PLR was dissolved in an aqueous solution, hydrolyzed and condensate under weakly alkaline conditions to obtain a cross-linked system. Then, through freeze-drying, the aerogel alloy wasobtained. Molten PEG was adsorbed into the cross linked PLR aerogel under 70 °C in vacuum oven. Enthalpy was detected by DSC with a value of 179.8 J/g, and the thermal conductivity measured was 0.2919 W/(m·K).

**Example 6.** The same method of Example 5 was followed, but in this case the amount of 2-(triethoxysilyl) propyl isocyanate was 5 mmol. Enthalpy was detected by DSC with a value of 168.9 J/g, and the thermal conductivity measured was 0.2835 W/(m·K).

**Example 7.** The same method of Example 5 was followed, but in this case the amount of 2-(triethoxysilyl) propyl isocyanate was 7.5 mmol. Enthalpy was detected by DSC with a value of 163.1 J/g, and the thermal conductivity measured was 0.3024 W/(m·K).

**Example** 8.The same method of Example 5 was followed, but in this case the amount of 2-(triethoxysilyl) propyl isocyanate was 10 mmol. Enthalpy was detected by DSC with value of 161.7 J/g, and the thermal conductivity measured was 0.3145 W/(m·K).

**Example 9.** The same method of Example 5 was followed, but in this case the mass ratio of $\alpha$-CD was 30 wt%, and the amount of 2-(triethoxysilyl) propyl isocyanate was 5 mmol. Enthalpy was detected by DSC with value of 154.7 J/g, and the thermal conductivity measured was 0.3259 W/(m·K).

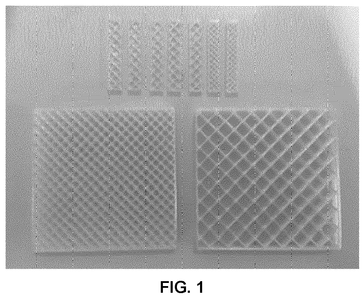

**Example 10.** A PLA based framework (or skeleton) was obtained by 3D printing method. The typical examples are shown in Figure 1. PLR (CD contents with 20 wt.%) was fabricated in the cells (with size of 8 mm×8 mm) of the skeleton by using PLR solution with concentration of 5 wt.%. After freeze drying, the support materials including both skeleton and PLR aerogel was obtained. PEG 6k was selected as the PCM work substance. The average latent heat was calculated with value of 164.7 J/g, and thermal conductivity is 0.2819 W/(m·K).

**Example 11.** A PLA based framework (or skeleton) was obtained by 3D printing method. The typical examples are shown in Figure 1. PLR (CD contents with 20 wt.%) was fabricated in the cells (with size of 4 mm×4 mm) of the skeleton by using PLR solution with concentration of 5 wt.%. After freeze drying, the support materials including both skeleton and PLR aerogel was obtained. PEG 6k was selected as the PCM work substance. The average latent heat was calculated with value of 151.4 J/g, and thermal conductivity measured was 0.3022 W/(m·K).

**Example 12.** A PLA based framework (or skeleton) was obtained by 3D printing method. The typical examples are shown in Figure 1. PLA solution (7 wt.% contents in acetone) was poured into the cells (with size of 8 mm×8 mm) of the skeleton. After temperature induced phase separation at refrigerator and freeze drying, the support materials including both skeleton and PLA aerogel was obtained. Paraffin was selected as the PCM work substance. The average latent heat was calculated with value of 189.5 J/g, and thermal conductivity measured was 0.2654 W/(m·K).

**Claims**

1. A shape-stabilized composite phase-change material comprising:

   a) a crosslinked polyrotaxane aerogel; and
   b) a solid-liquid phase-change material;

   wherein the phase-change material occupies an internal volume of the aerogel.

2. The composite according to claim 1, comprising at least 30%, preferably at least 50%, more preferably at least 70%, by weight percent of the phase-change material with respect to the total weight of the composite material.

3. The composite according to any one of claims 1 or 2, wherein the polyrotaxane aerogel comprises:

   a) a polyrotaxane comprising a polyethylene oxide chain of molecular weight above 600 000 g/mol; and
   b) a polyrotaxane comprising a polyethylene oxide chain of molecular weight below 600 000 g/mol.

4. The composite according to any one of claims 1 to 3, wherein the cross-linking agent is selected from the group consisting of silyl ethers isocyanate, diisocyanate, diacyl chloride, dialdehyde, diepoxide and polyepoxide compounds.

5. The composite according to any one of claims 1 to 4, wherein the polyrotaxane aerogel further comprises at least one functional additive selected from the group consisting of functionalized metal foams, functionalized ceramic porous materials, thermal conductive fillers, flame retardants, pigments and mixtures thereof.

6. The composite according to claim 5, wherein the second functional additive is selected from the group consisting of thermal conductive fillers, flame retardants, pigments and mixtures thereof.

7. The composite according to claim 6, wherein the thermal conductive fillers are selected from the group consisting of Boron Nitride, graphene, MXene, biochar, carbon fiber and thermally conductive ceramic powders.

8. The composite according to claim 6, wherein the flame retardants are selected from the group consisting of ammonium polyphosphate, phytic acid, chitosan, expandable graphite, lignin derivatives, polyhedral oligomeric silsesquioxane, metal-organic frameworks and layered double hydroxides.

9. The composite according to any one of claims 1 to 8, wherein the phase-change material is selected from the group consisting of polyethylene glycols, alkanes, paraffin waxes, beeswax, metal salts, carboxylic acids, fatty acids, fatty acid esters, fatty alcohols, sugar and sugar alcohols.

10. The composite according to claim 9, wherein the polyethylene glycol is selected from PEG 400, PEG 600, PEG 1000, PEG 1500, PEG 2k, PEG 3k, PEG 4k, PEG 6k, PEG 8k, PEG 10k or mixtures thereof.

11. A method for the preparation of a composite phase-change material as defined in any one of claims 1 to 10, wherein a polyrotaxane aerogel is put in contact with a molten phase-change material, and wherein said polyrotaxane aerogel is prepared by a method comprising the steps of:

   a) Dissolving a polymer molecule in a solvent;
   b) Adding a cyclodextrin to the solution of step a) to give a reaction mixture;
   c) Cooling the reaction mixture obtained in step b);
   d) Optionally, adding a cross-linking agent to the mixture obtained in step c);
   e) Freeze drying the mixture obtained in step c) and adding a cross-linking agent, or freeze drying the mixture obtained in step d), to obtain a crosslinked polyrotaxane aerogel.

12. A polymer/phase-change material composite comprising:

a) a 3D-printed polymer skeleton;
b) an aerogel; and
c) a solid-liquid phase-change material.

**13.** The polymer/phase-change material composite of claim 12, wherein the aerogel and the phase change-material are as defined in claims 1 to 10.

**14.** A method for obtaining the polymer/phase-change material composite of claim 12, comprising the steps of:

a) 3D printing a polymer skeleton using a functional polymer;
b) Incorporating an aerogel to the polymer skeleton obtained in step a) to form a supporter material;
c) Absorbing a solid-liquid phase change material in the supporter material obtained in step b) to form a polymer/phase-change material composite.

**15.** Use of a composite phase-change material according to any one of claims 1 to 10, or of the polymer/phase-change material composite according to claim 12, in thermal energy storage or thermal management including peak energy reduction, preferably in electronics, power electronics, solar energy, batteries, buildings, waste heat recovery, air-conditioning, temperature-adaptable greenhouses and textiles.

FIG. 1

FIG. 2

FIG. 3

| | Europäisches Patentamt<br>European Patent Office<br>Office européen des brevets | **PARTIAL EUROPEAN SEARCH REPORT**<br>under Rule 62a and/or 63 of the European Patent Convention.<br>This report shall be considered, for the purposes of<br>subsequent proceedings, as the European search report | **Application Number**<br>EP 24 38 2084 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/226567 A1 (DARTMOUTH COLLEGE [US]) 11 November 2021 (2021-11-11) * paragraphs [0020], [0037] - [0040], [0062] - [0063], [0084], [0132] - [0013] * | 1-11,15 | INV.<br>C09K5/06 |
| X,D | CN 110 982 111 A (SUZHOU INST NANO TECH & NANO BIONICS CAS) 10 April 2020 (2020-04-10) * abstract; claims * | 1-11,15 | |
| A | YIN GUANG-ZHONG ET AL: "Shape-stable and smart polyrotaxane-based phase change materials with enhanced flexibility and fire-safety", EUROPEAN POLYMER JOURNAL, PERGAMON PRESS LTD OXFORD, GB, vol. 173, 13 May 2022 (2022-05-13), XP087094953, ISSN: 0014-3057, DOI: 10.1016/J.EURPOLYMJ.2022.111262 [retrieved on 2022-05-13] * Introduction * | 1-11,15 | |

-/--

TECHNICAL FIELDS SEARCHED (IPC)

C09K

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 8 July 2024 | Martinez Marcos, V |

page 1 of 2

Europäisches
Patentamt

European
Patent Office

Office européen
des brevets

**PARTIAL EUROPEAN SEARCH REPORT**

Application Number

EP 24 38 2084

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A,D | GUANG-ZHONG YIN ET AL: "Polyrotaxane: New Generation of Sustainable, Ultra-flexible, Form-stable and Smart Phase Change Materials", ARXIV.ORG, CORNELL UNIVERSITY LIBRARY, 201 OLIN LIBRARY CORNELL UNIVERSITY ITHACA, NY 14853, 19 May 2021 (2021-05-19), XP081966184, * abstract * ----- | 1-11,15 | |
| | | | **TECHNICAL FIELDS SEARCHED** (IPC) |

EPO FORM 1503 03.82 (P04C10)

Europäisches
Patentamt

European
Patent Office

Office européen
des brevets

**INCOMPLETE SEARCH
SHEET C**

```
Claim(s) completely searchable:
        1-11

Claim(s) searched incompletely:
        15

Claim(s) not searched:
        12-14

Reason for the limitation of the search:

The search has been restricted to the subject-matter indicated by the
applicant in his letter of 04-07-2024 filed in reply to the invitation
pursuant to Rule 62a(1) EPC.
```

## ANNEX TO THE EUROPEAN SEARCH REPORT
## ON EUROPEAN PATENT APPLICATION NO.

EP 24 38 2084

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2024

| Patent document cited in search report | Publication date | Patent family member(s) | Publication date |
|---|---|---|---|
| WO 2021226567 A1 | 11-11-2021 | US 2023174680 A1<br>WO 2021226567 A1 | 08-06-2023<br>11-11-2021 |
| CN 110982111 A | 10-04-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105128127 A

- CN 110982111 B

**Non-patent literature cited in the description**

- **KHADIRAN, T.** ; **HUSSEIN, M.Z.** ; **ZAINAL, Z.** ; **RUSLI, R.** Encapsulation techniques for organic phase-change materials as thermal energy storage medium: A review.. *Solar Energy Materials and Solar Cells*, 2015, vol. 143, 78-98
- **SARIER, N** ; **ONDER, E.** Organic phase-change materials and their textile applications: An overview. *Thermochimica Acta*, 2012, vol. 540, 7-60
- **YIN, G-Z.** ; **HOBSON, K** ; **DUAN, Y** ; **WAND D-Y**. Polyrotaxane: New generation of sustainable, ultra-flexible, form-stable and smart phase change materials. *Energy Storage Materials*, 2021, vol. 40, 347-357

- **YIN, G-Z** ; **YANG, X-M.** ; **MARTA LÓPEZ, A** ; **WANG, M-T** ; **YE, W.** ; **XU, B** ; **WANG, D-Y.** Sodium alginate and Chitosan aided design of form-stable Polyrotaxane based phase change materials with ultra-high latent heat. *International Journal of Biological Macromolecules*, 2022, vol. 222, 429-437
- **VENTOLA, L. et al.** Molecular alloys as phase change materials for energy storage and thermal protection at temperatures from 70 to 85 °C. *J. Phys. Chem. Solids*, 2005, vol. 66, 1668-1674
- **SUNDARARAJAN, S et al.** Versatility of polyethylene glycol (PEG) in designing solid-solid phase change materials for thermal management and their application to innovative technology. *Journal of Materials Chemistry A*, 2017, vol. 5, 18379-18396